(19) **Europäisches Patentamt European Patent Office Office européen des brevets**

(11) **EP 4 644 436 A1**

(12) **EUROPEAN PATENT APPLICATION**

(43) Date of publication:
05.11.2025 Bulletin 2025/45

(21) Application number: 24174181.8

(22) Date of filing: 03.05.2024

(51) International Patent Classification (IPC):
*C08F 110/06* (2006.01)     *C08F 210/06* (2006.01)
*C08F 4/651* (2006.01)     *C08J 5/18* (2006.01)
*B32B 27/32* (2006.01)

(52) Cooperative Patent Classification (CPC):
(C-Sets available)
**C08F 210/06; C08J 5/18; C08L 23/12;** B32B 27/32;
C08J 2323/04; C08J 2323/10; C08J 2323/16
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **AARNIO-WINTERHOF, Minna Kaarina**
  **4021 Linz (AT)**
• **COSTA, Francis Reny**
  **4021 Linz (AT)**
• **GLOGER, Dietrich**
  **4021 Linz (AT)**
• **ODERKERK, Jeroen**
  **44486 Stenungsund (SE)**
• **HESSELGREN, Jessica**
  **444 86 Stenungsund (SE)**
• **ROMANENKO, Yuliia**
  **4021 Linz (AT)**

(74) Representative: **Maiwald GmbH**
**Elisenhof**
**Elisenstraße 3**
**80335 München (DE)**

(54) **HETEROPHASIC PROPYLENE-ETHYLENE COPOLYMER HAVING EXCELLENT STIFFNESS-IMPACT STRENGTH BALANCE, OPTICAL PROPERTIES AND STRESS WHITENING PERFORMANCE**

(57) A heterophasic propylene-ethylene copolymer (HECO), having an $MFR_2$ of 0.5 to 20.0 g/10 min, SF content of 10.0 to 25.0 wt.-%, C2(SF) of 20.0 to 40.0 wt.-%, 1V(SF) of 1.50 to 3.50 dL/g, wherein the homopolymer matrix comprises:
a) from 35.0 to 65.0 wt.-% of a first propylene homopo-lymer fraction (h-PPI); and
b) from 35.0 to 65.0 wt.-% of a second propylene homopolymer fraction (h-PP2),
wherein $[MFR_2(\text{h-PP2})/MFR_2(\text{h-PP1})]$ is in the range from 2.0 to 20.0.

EP 4 644 436 A1

(52) Cooperative Patent Classification (CPC): (Cont.)

C-Sets
**C08F 10/06, C08F 4/6465;**
**C08F 10/06, C08F 4/6492;**
**C08F 10/06, C08F 4/651;**
**C08F 110/06, C08F 2/001;**
**C08F 210/06, C08F 2/001;**
**C08L 23/12, C08L 23/12, C08L 23/16;**
C08F 110/06, C08F 2500/12;
C08F 210/06, C08F 210/16, C08F 2500/12,
C08F 2500/27, C08F 2500/35, C08F 2500/17,
C08F 2500/33, C08F 2500/34, C08F 2500/30,
C08F 2500/31, C08F 2500/26

**Description**

**Field of the Invention**

The present invention is directed to a heterophasic propylene-ethylene copolymer and to articles comprising at least 75 wt.-% of the heterophasic propylene-ethylene copolymer.

**Background to the Invention**

Polymers, like polypropylene, are increasingly used in different demanding applications. At the same time, there is a continuous search for tailored polymers that meet the requirements of these applications. The demands can be challenging, since many polymer properties are directly or indirectly interrelated, i.e. improving a specific property can only be accomplished on the expense of another property. Stiffness can for instance be improved by increasing the crystallinity and/or the relative amount of homopolymer within the composition. As a consequence, the material becomes more brittle, thereby resulting in poor impact properties. It is known that impact strength of polypropylene can be improved by dispersing a rubber phase within the polymer matrix, thereby obtaining a heterophasic polypropylene composition.

Such heterophasic propylene copolymers comprise a matrix being either a propylene homopolymer or a random propylene copolymer in which an amorphous phase, which contains a propylene copolymer rubber (elastomer), is dispersed. Thus, the polypropylene matrix contains (finely) dispersed inclusions not being part of the matrix and said inclusions contain the elastomer. The term inclusion indicates that the matrix and the inclusion form different phases within the heterophasic propylene copolymer, said inclusions are for instance visible by high-resolution microscopy, like electron microscopy, scanning force microscopy or atomic force microscopy, or by dynamic mechanical thermal analysis (DMTA). Many different types of heterophasic systems have been described depending on the individual requirements.

For transparent/translucent injection moulded articles, it is important to achieve a good balance of stiffness and impact strength (with improvements in stiffness generally understood to be achievable at the expense of the impact strength and vice versa), coupled with good optical properties (clarity, haze, transmittance etc.) and minimized stress whitening properties. Stress whitening is of particular relevance, as poor stress whitening behavior would swiftly undermine any beneficial optical properties.

As such, whilst many heterophasic systems are known, continued development to achieve particularly beneficial balances of mechanical, optical and stress whitening properties remains a goal in polymer development.

**Summary of the Invention**

The present invention is thus based on the finding that heterophasic propylene-ethylene copolymers having a specially designed bimodal homopolymer matrix have an improved balance of mechanical, optical and stress whitening properties, so long as the intrinsic viscosity and the ethylene content of the rubber phase are both not too high.

In a first aspect, the present invention is directed to a heterophasic propylene-ethylene copolymer (HECO), having a melt flow rate ($MFR_2$), determined according to ISO 1133 at 230 °C and 2.16 kg, in the range from 0.5 to 20.0 g/10 min, comprising:

a) a crystalline matrix (M) being a propylene homopolymer; and
b) an amorphous propylene-ethylene elastomer (E) that is dispersed in said crystalline matrix (M),

wherein the heterophasic propylene-ethylene copolymer (HECO) contains:

i) from 10.0 to 25.0 wt.-%, relative to the total weight of the heterophasic propylene-ethylene copolymer (HECO), of a soluble fraction (SF), determined by CRYSTEX QC analysis, wherein the soluble fraction (SF) has an ethylene content (C2(SF)), determined by CRYSTEX QC analysis, in the range from 20.0 to 40.0 wt.-% and an intrinsic viscosity (iV(SF)), determined by CRYSTEX QC analysis, in the range from 1.50 to 3.50 dL/g; and
ii) from 75.0 to 90.0 wt.-%, relative to the total weight of the heterophasic propylene-ethylene copolymer (HECO), of a crystalline fraction (CF), determined by CRYSTEX QC analysis,

wherein the crystalline matrix (M) comprises:

a) from 35.0 to 65.0 wt.-%, relative to the total weight of the crystalline matrix (M), of a first propylene homopolymer fraction (h-PP1); and
b) from 35.0 to 65.0 wt.-%, relative to the total weight of the crystalline matrix (M), of a second propylene homopolymer fraction (h-PP2),

wherein the melt flow rate ($MFR_2$), determined according to ISO 1133 at 230 °C and 2.16 kg, of the second propylene homopolymer fraction (h-PP2), divided by the melt flow rate ($MFR_2$), determined according to ISO 1133 at 230 °C and 2.16 kg, of the first propylene homopolymer fraction (h-PP1) [$MFR_2$(h-PP2)/$MFR_2$(h-PP1)] is in the range from 2.0 to 20.0.

In a further aspect the present invention is directed to an article, more preferably an injection moulded article, a cast film, or a blown film, wherein the article comprises at least 75 wt.-% of the heterophasic propylene-ethylene copolymer (HECO) according to the first aspect.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol% comonomer units, preferably up to 0.05 mol% comonomer units and most preferably up to 0.01 mol% comonomer units.

A propylene random copolymer is a copolymer of propylene monomer units and comonomer units, preferably selected from ethylene and $C_4$-$C_8$ alpha-olefins, in which the comonomer units are distributed randomly over the polymeric chain. The propylene random copolymer can comprise comonomer units from one or more comonomers different in their amounts of carbon atoms.

Heterophasic propylene copolymers typically comprise:

a) a crystalline propylene homopolymer or copolymer matrix (M); and
b) an elastomeric rubber, preferably a propylene-ethylene copolymer (E).

In case of a random heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

The present invention will now be described in more detail.

**Detailed Description**

**Heterophasic propylene-ethylene copolymer (HECO)**

The heterophasic propylene-ethylene copolymer (HECO) has a melt flow rate ($MFR_2$), determined according to ISO 1133 at 230 °C and 2.16 kg, in the range from 0.5 to 20.0 g/10 min, more preferably in the range from 1.0 to 10.0 g/10 min, most preferably in the range from 1.5 to 4.0 g/10 min.

The heterophasic propylene-ethylene copolymer (HECO) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data (than for example xylene cold soluble-based methods), since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The heterophasic propylene-ethylene copolymer (HECO) preferably has an ethylene content (C2(total)), determined by CRYSTEX QC analysis, in the range from 3.0 to 10.0 wt.-%, more preferably in the range from 4.0 to 9.0 wt.-%, most preferably in the range from 5.0 to 8.2 wt.-%.

The heterophasic propylene-ethylene copolymer (HECO) has a soluble fraction (SF) content, determined by CRYSTEX QC analysis, in the range from 10.0 to 25.0 wt.-%, more preferably in the range from 12.0 to 22.0 wt.-%, most preferably in the range from 13.0 to 20.0 wt.-%.

The heterophasic propylene-ethylene copolymer (HECO) has an ethylene content of the soluble fraction (C2(SF)), determined by CRYSTEX QC analysis, in the range from 20.0 to 40.0 wt.-%, more preferably in the range from 25.0 to 38.0 wt.-%, most preferably in the range from 28.0 to 35.0 wt.-%.

The heterophasic propylene-ethylene copolymer (HECO) has an intrinsic viscosity of the soluble fraction (iV(SF)), determined by CRYSTEX QC analysis, in the range from 1.50 to 3.50 dL/g, more preferably in the range from 1.80 to 3.30 dL/g, most preferably in the range from 2.00 to 3.20 dL/g.

The heterophasic propylene-ethylene copolymer (HECO) has a crystalline fraction (CF) content, determined by CRYSTEX QC analysis, in the range from 75.0 to 90.0 wt.-%, more preferably in the range from 78.0 to 88.0 wt.-%, most preferably in the range from 80.0 to 87.0 wt.-%.

The heterophasic propylene-ethylene copolymer (HECO) preferably has an ethylene content of the crystalline fraction (C2(CF)), determined by CRYSTEX QC analysis, in the range from 1.0 to 5.0 wt.- %, more preferably in the range from 1.3 to 4.0 wt.-%, most preferably in the range from 1.5 to 3.0 wt.-%.

The heterophasic propylene-ethylene copolymer (HECO) preferably has an intrinsic viscosity of the crystalline fraction (iV(CF)), determined by CRYSTEX QC analysis, in the range from 2.00 to 3.00 dL/g, more preferably in the range from 220 to 2.80 dL/g, most preferably in the range from 2.40 to 2.70 dL/g.

The heterophasic propylene-ethylene copolymer (HECO) preferably has a melting temperature ($T_m$), determined by differential scanning calorimetry (DSC), in the range from 160 to 172 °C, more preferably in the range from 163 to 170 °C, most preferably in the range from 165 to 168 °C.

The heterophasic propylene-ethylene copolymer (HECO) preferably has a crystallization temperature ($T_c$), determined by differential scanning calorimetry (DSC), in the range from 110 to 135 °C, more preferably in the range from 116 to 133 °C, most preferably in the range from 120 to 131 °C.

The heterophasic propylene-ethylene copolymer (HECO) comprises:

i) a crystalline matrix (M) being a propylene homopolymer; and
ii) an amorphous propylene-ethylene elastomer (E) that is dispersed in said crystalline matrix (M).

The crystalline matrix component (M) preferably is free from 2,1-regiodefects as determined by quantitative $^{13}$C-NMR spectroscopy. The absence of 2,1-regiodefects is typical for polypropylenes polymerized using Ziegler-Natta catalysts.

Preferably, the heterophasic propylene-ethylene copolymer (HECO) has been polymerized in the presence of a Ziegler-Natta catalyst.

Furthermore, the crystalline matrix (M) comprises:

a) from 35.0 to 65.0 wt.-%, relative to the total weight of the crystalline matrix (M), of a first propylene homopolymer fraction (h-PP1); and
b) from 35.0 to 65.0 wt.-%, relative to the total weight of the crystalline matrix (M), of a second propylene homopolymer fraction (h-PP2),

wherein the melt flow rate ($MFR_2$), determined according to ISO 1133 at 230 °C and 2.16 kg, of the second propylene homopolymer fraction (h-PP2), divided by the melt flow rate ($MFR_2$), determined according to ISO 1133 at 230 °C and 2.16 kg, of the first propylene homopolymer fraction (h-PP1) [$MFR_2$(h-PP2)/$MFR_2$(h-PP1)] is in the range from 2.0 to 20.0.

It is preferred that the crystalline matrix (M) comprises:

a) from 38.0 to 55.0 wt.-%, relative to the total weight of the crystalline matrix (M), of the first propylene homopolymer fraction (h-PP1); and
b) from 45.0 to 62.0 wt.-%, relative to the total weight of the crystalline matrix (M), of the second propylene homopolymer fraction (h-PP2).

It is most preferred that the crystalline matrix (M) comprises:

a) from 40.0 to 52.0 wt.-%, relative to the total weight of the crystalline matrix (M), of the first propylene homopolymer fraction (h-PP1); and
b) from 48.0 to 60.0 wt.-%, relative to the total weight of the crystalline matrix (M), of the second propylene homopolymer fraction (h-PP2).

It is preferred that the crystalline matrix (M) has a melt flow rate ($MFR_2$), determined according to ISO 1133 at 230 °C and 2.16 kg, in the range from 0.5 to 7.0 g/10 min, more preferably in the range from 1.0 to 5.0 g/10 min, most preferably in the range from 1.5 to 3.0 g/10 min.

It is preferred that the first propylene homopolymer fraction (h-PP1) has a melt flow rate ($MFR_2$), determined according to ISO 1133 at 230 °C and 2.16 kg, in the range from 0.1 to 3.0 g/10 min, more preferably in the range from 0.3 to 2.0 g/10 min, most preferably in the range from 0.5 to 1.0 g/10 min.

It is preferred that the second propylene homopolymer fraction (h-PP2) has a melt flow rate ($MFR_2$), determined according to ISO 1133 at 230 °C and 2.16 kg, in the range from 3.0 to 15.0 g/10 min, more preferably in the range from 3.5 to 13.0 g/10 min, most preferably in the range from 4.0 to 11.0 g/10 min.

It is preferred that the melt flow rate ($MFR_2$), determined according to ISO 1133 at 230 °C and 2.16 kg, of the second propylene homopolymer fraction (h-PP2), divided by the melt flow rate ($MFR_2$), determined according to ISO 1133 at 230 °C and 2.16 kg, of the first propylene homopolymer fraction (h-PP1) [$MFR_2$(h-PP2)/$MFR_2$(h-PP1)] is in the range from 3.3 to 18.0, most preferably in the range from 5.0 to 17.0.

It is preferred that the heterophasic propylene-ethylene copolymer (HECO) has a flexural modulus, determined according to ISO 178 on $80 \times 10 \times 4$ mm$^3$ injection-moulded specimens prepared according to ISO 19069-2, in the range from 1100 to 2000 MPa, more preferably in the range from 1200 to 1800 MPa, most preferably in the range from 1300 to 1600 MPa.

It is preferred that the heterophasic propylene-ethylene copolymer (HECO) has a Charpy Notched Impact Strength (NIS) at 23 °C, measured according to ISO 179-1 eA on $80 \times 10 \times 4$ mm$^3$ injection-moulded specimens prepared according to ISO 19069-2, in the range from 10.0 to 80 kJ/m$^2$, more preferably in the range from 13.0 to 70 kJ/m$^2$, most preferably in the range from 15.0 to 60 kJ/m$^2$.

It is preferred that the heterophasic propylene-ethylene copolymer (HECO) has a Charpy Notched Impact Strength (NIS) at 0 °C, measured according to ISO 179-1 eA on $80 \times 10 \times 4$ mm$^3$ injection-moulded specimens prepared according to ISO 19069-2, in the range from 2.0 to 9.0 kJ/m$^2$, more preferably in the range from 2.5 to 8.0 kJ/m$^2$, most preferably in the range from 3.0 to 7.5 kJ/m$^2$.

It is preferred that the heterophasic propylene-ethylene copolymer (HECO) has a Charpy Notched Impact Strength (NIS) at -20 °C, measured according to ISO 179-1 eA on $80 \times 10 \times 4$ mm$^3$ injection-moulded specimens prepared according to ISO 19069-2, in the range from 1.0 to 7.0 kJ/m$^2$, more preferably in the range from 1.3 to 6.0 kJ/m$^2$, most preferably in the range from 1.6 to 5.0 kJ/m$^2$.

It is preferred that the heterophasic propylene-ethylene copolymer (HECO) has a clarity value, determined according to ASTM D1003 on $60 \times 60 \times 1$ mm$^3$ injection-moulded specimens prepared according to ISO 19069-2, in the range from 40.0 to 100.0%, more preferably in the range from 55.0 to 99.0%, most preferably in the range from 65.0 to 98.0%.

It is preferred that the heterophasic propylene-ethylene copolymer (HECO) has a haze value, determined according to ASTM D1003 on $60 \times 60 \times 1$ mm$^3$ injection-moulded specimens prepared according to ISO 19069-2, in the range from 50.0 to 100.0%, more preferably in the range from 60.0 to 99.0%, most preferably in the range from 65.0 to 98.0%.

It is preferred that the heterophasic propylene-ethylene copolymer (HECO) has a total luminous transmittance, determined according to ASTM D1003 on $60 \times 60 \times 1$ mm$^3$ injection-moulded specimens prepared according to ISO 19069-2, in the range from 65.0 to 90.0%, more preferably in the range from 70.0 to 85.0%, most preferably in the range from 72.0 to 80.0%.

It is preferred that the heterophasic propylene-ethylene copolymer (HECO) has a total diffuse luminous transmittance, determined according to ASTM D1003 on $60 \times 60 \times 1$ mm$^3$ injection-moulded specimens prepared according to ISO 19069-2, in the range from 35.0 to 90.0%, more preferably in the range from 40.0 to 85.0%, most preferably in the range from 45.0 to 80.0%.

It is preferred that the heterophasic propylene-ethylene copolymer (HECO) has a tensile modulus (TM-MD), determined according to ISO 527-3 on a 400 μm monolayer cast film specimen in the machine direction, in the range from 700 to 1500 MPa, more preferably 800 to 1300 MPa, most preferably 900 to 1200 MPa.

It is preferred that the heterophasic propylene-ethylene copolymer (HECO) has a tensile modulus (TM-TD), determined according to ISO 527-3 on a 400 μm monolayer cast film specimen in the transvers direction, in the range from 600 to 1500 MPa, more preferably 650 to 1300 MPa, most preferably 700 to 1200 MPa.

It is preferred that the heterophasic propylene-ethylene copolymer (HECO) has a clarity value, determined according to ASTM D1003 on a 400 μm monolayer cast film specimen, in the range from 15.0 to 95.0%, more preferably 40.0 to 90.0%, most preferably 50.0 to 85.0%.

It is preferred that the heterophasic propylene-ethylene copolymer (HECO) has a haze value, determined according to ASTM D1003 on a 400 μm monolayer cast film specimen, in the range from 30.0 to 90.0%, more preferably 35.0 to 80.0%, most preferably 40.0 to 65.0%.

It is preferred that the heterophasic propylene-ethylene copolymer (HECO) has a total luminous transmittance, determined according to ASTM D1003 on a 400 μm monolayer cast film specimen, in the range from 75.0 to 94.0%, more preferably 80.0 to 92.0%, most preferably 82.0 to 90.0%.

It is preferred that the heterophasic propylene-ethylene copolymer (HECO) has a total diffuse luminous transmittance, determined according to ASTM D1003 on a 400 μm monolayer cast film specimen, in the range from 20.0 to 80.0%, more preferably 25.0 to 70.0%, most preferably 30.0 to 60.0%.

The heterophasic propylene-ethylene copolymer (HECO) preferably has a stress whitening onset force in the machine direction, determined according to the method described in the determination methods on a 400 μm monolayer cast film specimen, in the range from 55 to 100 N, more preferably in the range from 60 to 90 N, most preferably in the range from 70 to 80 N.

The heterophasic propylene-ethylene copolymer (HECO) preferably has a stress whitening onset displacement in the machine direction, determined according to the method described in the determination methods on a 400 μm monolayer cast film specimen, in the range from 1.50 to 4.00 mm, more preferably in the range from 1.60 to 3.50 mm, most preferably in the range from 1.70 to 3.20 mm.

The heterophasic propylene-ethylene copolymer (HECO) preferably has a slope of the stress whitening light curve in the machine direction, determined according to the method described in the determination methods on a 400 μm monolayer cast film specimen, in the range from -6000 to 0 mV/mm, more preferably in the range from -5000 to 0 mV/mm, most preferably in the range from -4500 to 0 mV/mm.

The heterophasic propylene-ethylene copolymer (HECO) preferably has a stress whitening onset force in the transverse direction, determined according to the method described in the determination methods on a 400 μm monolayer cast film specimen, in the range from 55 to 100 N, more preferably in the range from 60 to 90 N, most preferably in the range from 64 to 75 N.

The heterophasic propylene-ethylene copolymer (HECO) preferably has a stress whitening onset displacement in the transverse direction, determined according to the method described in the determination methods on a 400 μm monolayer cast film specimen, in the range from 1.10 to 4.00 mm, more preferably in the range from 1.15 to 3.00 mm, most preferably in the range from 1.20 to 2.00 mm.

The heterophasic propylene-ethylene copolymer (HECO) preferably has a slope of the stress whitening light curve in the transverse direction, determined according to the method described in the determination methods on a 400 μm monolayer cast film specimen, in the range from -10,000 to 0 mV/mm, more preferably in the range from -9500 to 0 mV/mm, most preferably in the range from -9000 to 0 mV/mm.

The heterophasic propylene-ethylene copolymer (HECO) can be polymerized in a sequential polymerization process, such as a multistage process.

A suitable process is described in WO 2018/141672.

It is preferred that the heterophasic propylene-ethylene copolymer (HECO) is produced in a sequential polymerization process comprising the steps of

(a) polymerizing propylene and optionally at least one ethylene and/or C4 to C12 α-olefin, preferably propylene as the only monomer, in the presence of a catalyst in a first reactor (R1),

(b) transferring the reaction mixture of the polymerized first polypropylene, preferably propylene homopolymer, fraction together with the catalyst, into a second reactor (R2),

(c) polymerizing in the second reactor (R2) and in the presence of said first polypropylene polymer, propylene and optionally at least one ethylene and/or C4 to C12 α-olefin, preferably propylene as the only monomer, in obtaining thereby the second polypropylene fraction, preferably said second polypropylene fraction is a second propylene homopolymer, whereby said first polypropylene fraction and said second polypropylene fraction form the matrix component of the heterophasic propylene-ethylene copolymer (HECO),

(d) transferring the reaction mixture of the polymerized matrix component of step (c) into a third reactor (R3),

(e) polymerizing in the third reactor (R3) and in the presence of the matrix component obtained in step (c), propylene and at least one ethylene and/or C4 to C12 α-olefin obtaining thereby the elastomeric component of heterophasic propylene-ethylene copolymer (HECO), wherein the elastomeric propylene copolymer component is dispersed in said matrix component.

Optionally the elastomeric component can be produced in two reactors, whereby after above step (e),

(f) transferring the polypropylene (PP) in which the first elastomeric propylene copolymer fraction is dispersed in a fourth reactor (R4), and

(g) polymerizing in the fourth reactor (R4) and in the presence of the mixture obtained in step (e) propylene and at least one ethylene and/or C4 to C12 α-olefin obtaining thereby the second elastomeric propylene copolymer fraction, whereby the polypropylene (PP), the first elastomeric propylene copolymer fraction, and the second elastomeric propylene copolymer fraction form the heterophasic propylene-ethylene copolymer (HECO).

Preferably between the second reactor (R2) and the third reactor (R3) the monomers are flashed out.

The term "sequential polymerization process" indicates that the heterophasic propylene-ethylene copolymer (HECO) is produced in at least two, like three, reactors connected in series. Accordingly the present process comprises at least a first reactor (R1) and a second reactor (R2), more preferably a first reactor (R1), a second reactor (R2), a third reactor (R3) and optionally a fourth reactor (R4). The term "polymerization reactor" shall indicate one of the main polymerization steps. Thus in case the process consists of four polymerization reactors, this definition does not exclude the option that the overall process comprises for instance a prepolymerization step in a prepolymerization reactor. The term "consist of" is only a closing formulation in view of the main polymerization reactors.

Any prepolymer fraction is counted into the amount of the first polypropylene fraction.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3) and the optional fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2), the third reactor (R3) and the optional fourth reactor (R4) are gas phase reactors (GPR). Accordingly for the instant process at least three, namely a slurry reactor (SR), like a loop reactor (LR), a first gas phase reactor (GPR-1), a second gas phase reactor (GPR-2) and an optional a third gas phase reactor (GPR-3) connected in series are used. In case of a prepolymerization step a prepolymerization reactor is placed prior to the slurry reactor (SR).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell.

Preferably, in the instant process for producing the heterophasic propylene-ethylene copolymer (HECO) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the second gas phase reactor (GPR-2) and in the optional third gas phase reactor (GPR-3) are similar to the second reactor (R2) (= first gas phase reactor (GPR-1).

The residence time can vary in the three reactor zones.

In one embodiment of the process for producing the matrix component of the heterophasic propylene-ethylene copolymer (HECO) the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skills of the skilled person.

After the heterophasic propylene-ethylene copolymer (HECO) has been removed from the last polymerization stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the heterophasic copolymer of propylene is preferably mixed with additives as it is well known in the art. Such additives are described above for the polyethylene composition (PE-A). The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

The heterophasic propylene-ethylene copolymer (HECO) is preferably produced by polymerization using any suitable Ziegler-Natta type. Typical suitable Ziegler-Natta type catalyst is stereospecific, solid high yield Ziegler-Natta catalyst component comprising as essential components Mg, Ti and Cl. In addition to the solid catalyst a cocatalyst(s) as well external donor(s) are typically used in polymerization process.

Components of catalyst may be supported on a particulate support, such as inorganic oxide, like silica or alumina, or, usually, the magnesium halide may form the solid support. It is also possible that catalysts components are not supported on an external support, but catalyst is prepared by emulsion-solidification method or by precipitation method.

Alternatively the heterophasic propylene-ethylene copolymer (HECO) of the invention can be produced using a modified catalyst system as described below.

More preferably, a vinyl compound of the formula (I) is used for the modification of the catalyst:

$$CH_2=CH-CHR^1R^2 \qquad (I)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the $-CHR^1R^2$ moiety is not present.

More preferably, the vinyl compound (I) is selected from: vinyl cycloalkane, preferably vinyl cyclohexane (VCH), vinyl cyclopentane, 3-methyl-1-butene polymer and vinyl-2-methyl cyclohexane polymer. Most preferably the vinyl compound (I) is vinyl cyclohexane (VCH) polymer. Modification of the catalyst with vinyl cyclohexane (VCH) is known as BNT nucleation technology, which is described in detail in WO 99/24478, WO 99/24479 and particularly WO 00/68315.

For embodiments where the mechanical properties of the heterophasic propylene-ethylene copolymer (HECO) are most important, it may be preferably to employ BNT nucleation. For embodiments where the optical and stress whitening properties are more important, it may be considered not to employ BNT nucleation.

The solid catalyst usually also comprises an electron donor (internal electron donor) and optionally aluminium. Suitable internal electron donors are, among others, esters of carboxylic acids or dicarboxylic acids, like phthalates, maleates, benzoates, citraconates, and succinates, 1,3-diethers or oxygen or nitrogen containing silicon compounds. In addition mixtures of donors can be used.

The cocatalyst typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

Suitable external electron donors used in polymerization are well known in the art and include ethers, ketones, amines, alcohols, phenols, phosphines and silanes. Silane type external donors are typically organosilane compounds containing Si-OCOR, Si-OR, or Si-NR$_2$ bonds, having silicon as the central atom, and R is an alkyl, alkenyl, aryl, arylalkyl or cycloalkyl with 1-20 carbon atoms are known in the art.

Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

Articles

In a further aspect the present invention is directed to an article comprising at least 75 wt.-% of the heterophasic propylene-ethylene copolymer (HECO) according to the first aspect.

Preferably, the article comprises at least 80 wt.-%, more preferably at least 85 wt.-%, yet more preferably at least 90 wt.-%, most preferably at least 95 wt.-% of the heterophasic propylene-ethylene copolymer (HECO) according to the first aspect.

It is preferred that the article is selected from the group consisting of injection moulded articles, cast films, and blown films. In one embodiment, the article is a cast film. In another embodiment, the article is a blown film. In a final embodiment, the article is an injection moulded article.

## EXAMPLES

### 1. Determination methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity of the polymers.

Quantitative 13C{1H} NMR spectra recorded in the solution-state using a Bruker Avance Neo 400 NMR spectrometer operating at 400.15 and 100.62 MHz for 1H and 13C respectively. All spectra were recorded using a 13C optimised 10 mm selective excitation probehead at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification {busico01, busico97}. Standard single-pulse excitation was employed utilising the NOE, 3 s recycle delay and bi-level WALTZ16 decoupling scheme {zhou07,busico07}. A total of 8192 (8k) transients were acquired per spectra.

13C{ 1H} NMR spectra were processed, integrated and relevant quantitative properties determined from the integrals using proprietary computer programs. All chemical shifts were internally referenced to the methyl signal of the isotactic pentad mmmm at 21.85 ppm.

The tacticity distribution was quantified through integration of the methyl region between 23.6 and 19.7 ppm correcting for any sites not related to the stereo sequences of interest {busico01, busico97}.

Characteristic signals corresponding to the presence of regio defects {resconi00} were not observed.

The pentad tacticity distribution was determined through direct separate integration of each methyl signal from a given steric pentad followed by normalization to the sum of methyl signals from all steric pentads. The relative content of a specific steric pentad was reported as the mole fraction or percentage of a given steric pentad xxxx with respect to all steric pentads:

$$[\text{xxxx}] = \text{xxxx} / (\text{mmmm} + \text{mmmr} + \text{rmmr} + \text{mmrr} + \text{xmrx} + \text{mrmr} + \text{rrrr} + \text{mrrr} + \text{mrrm})$$

where xmrx represents the combined integral of both mmrm and rmrr as signal from these steric pentads are not commonly resolved. The pentad isotacticity was thus given by:

$$[\text{mmmm}] = \text{mmmm} / (\text{mmmm} + \text{mmmr} + \text{rmmr} + \text{mmrr} + \text{xmrx} + \text{mrmr} + \text{rrrr} + \text{mrrr} + \text{mrrm})$$

busico01    Busico, V., Cipullo, R., Prog. Polym. Sci. 26 (2001) 443
busico97    Busico, V., Cipullo, R., Monaco, G., Vacatello, M., Segre, A.L., Macromoleucles 30 (1997) 6251

(continued)

| zhou07 | Zhou, Z., Kuemmerle, R., Qiu, X., Redwine, D., Cong, R., Taha, A., Baugh, D. Winniford, B., J. Mag. Reson. 187 (2007) 225 |
| busico07 | Busico, V., Carbonniere, P., Cipullo, R., Pellecchia, R., Severn, J., Talarico, G., Macromol. Rapid Commun. 2007, 28, 1128 |
| resconi00 | Resconi, L., Cavallo, L., Fait, A., Piemontesi, F., Chem. Rev. 2000, 100, 1253 |

**CRYSTEX QC analysis**

***Crystalline and soluble fractions method***

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13 mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2$$

(Equation 2)

The constants a to e for equation 1 and a to f for equation 2 were determined by using least square regression analysis.

The $CH_3/1000C$ is converted to the ethylene content in wt.-% using following relationship:

$$Wt.\text{-}\% \text{ (Ethylene in EP Copolymers)} = 100 - CH_3/1000TC * 0.3 \qquad (Equation 3)$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$Wt.\text{-}\% \text{ XS} = 1.01* Wt.\text{-}\% \text{ SF} \qquad (Equation 4)$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \ (dL/g) = a* \ Vsp/c \quad (equation \ 5)$$

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0,05mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Quantification of microstructure by NMR spectroscopy (for CRYSTEX calibration)**

Quantitative nuclear-magnetic resonance (NMR) spectroscopy was used for calibration.

Quantitative 13C{ 1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ 16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( \ E \ / \ ( \ P + E \ )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction:

$$E \ [mol\%] = 100 * fE$$

The weight percent comonomer incorporation was calculated from the mole fraction:

$$E \ [wt\%] = 100 * ( \ fE * 28.06 \ ) / ( \ (fE * 28.06) + ((1\text{-}fE) * 42.08) \ ).$$

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Calculation** of melt flow rate $MFR_2$ (230 °C) of the second propylene homopolymer fraction (h-PP2):

$$MFR(PP2) = 10^{\left[\frac{\log(MFR(PP)) - w(PP1) \times \log(MFR(PP1))}{w(PP2)}\right]}$$

wherein

w(PP1)      is the weight fraction [in wt.-%] of the first propylene homopolymer fraction (h-PP1),
w(PP2)      is the weight fraction [in wt.-%] of second propylene homopolymer fraction (h-PP2),
MFR(PP1)    is the melt flow rate $MFR_2$ (230 °C) [in g/10min] of the first propylene homopolymer fraction (h-PP1),
MFR(PP)     is the melt flow rate $MFR_2$ (230 °C) [in g/10min] of the crystalline matrix (M), i.e. of a blend of h-PP1 and h-PP2,
MFR(PP2)    is the calculated melt flow rate $MFR_2$ (230 °C) [in g/10min] of the second propylene homopolymer fraction (h-PP2).

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

**The Flexural Modulus** is determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was $23\pm2$ ° C. Injection moulding was carried out according to ISO 19069-2 using a melt temperature of 230 °C for all materials irrespective of material melt flow rate.

## Notched impact strength (NIS)

The Charpy notched impact strength (NIS) was measured according to ISO 179 1eA at +23 °C, 0 °C or -20 °C, using injection moulded bar test specimens of $80 \times 10 \times 4$ mm$^3$ prepared in accordance with ISO 19069-2 using a melt temperature of 230 °C for all materials irrespective of material melt flow rate.

**Tensile properties** in machine and transverse direction were determined according to ISO 527-1/-3 at 23°C on monolayer cast films with a thickness of 400 $\mu$m produced as indicated below. In addition, the tensile modulus (secant modulus between 0.05% and 0.25% elongation) was also determined. Testing was performed at a cross head speed of 1 mm/min to determine the tensile modulus, then the test speed was increased to 200 mm/min until the film broke.

## Optical properties

The total luminous transmittance, diffuse luminous transmittance and haze were measured according to ASTM D1003-21 (Method A-Hazemeter). The clarity is measured using the same machine and principle as haze but for angle less than 2.5° from normal. For clarity measurements, the specimens are positioned in the "clarity-port". The measurement was performed as follows:

- Device: Haze gard plus
- Manufacturer: BYK-Gardner GmbH
- Type:4725
- Illuminant C

Conditions:

- Conditioning time: > 96 h
- Temperature: 23 °C
- Test procedure: A - Hazemeter

**Stress whitening**

Stress whitening is determined on dog-bone-shaped specimens of ISO 527-2 type 1B (Figure 1). The specimens are milled from cast films of 400 μm thickness. The specimens have an additional parallel narrowed area with a length of 6 mm and a width of 7 mm in the centre to concentrate the stresses. The optical transparency measurement device is positioned in the centre of this area.

**Figure 1**        Schematic view of the stress whitening specimen.

The specimen is mounted in a Zwick Z010 with a 500 N load cell and a clamping distance of 105 mm. The displacement is measured using a mechanical extensometer with an initial clamping distance of 70 mm. The tensile test is conducted at a constant cross-head speed of 5 mm/min and at least up to the yielding of the specimen.

The optical transparency measurements device is made in-house and comprises a warm white LED Nichita NSPL5 10DS and a photodiode Hamatsutsu S13948-01SB. The distance between the LED and the photodiode is 5.25 mm. In front of the photodiode is a mask with a pinhole of 1.5 mm in diameter to restrict light passing from the side.

The comparison of the transparency measurements of the in-house-made device against the transmittance measurement according to ASTM D1003 with a Haze-gard plus from BYK-Gardnerare is shown in Figure 2. A narrow transmittance ($T_{narrow}$) may be calculated according to the equation below where the total transmittance ($T_{total}$) and haze are according to ASTM D1003 and $\gamma$ is a calibration factor for the device equal to 0.4. It can be seen that there is a good correlation between the narrow transmittance and the voltage output of the device.

$$T_{narrow} = T_{total} \times \left( 1 - \frac{\gamma \times haze}{100} \right)$$

**Figure 2**        Comparison between the transparency measurements of the described device (X-axis) and the narrow transmittance previously defined.

The optical response (light transmission through the sample) and the tensile load along the deflection are recorded. The initial Transparency (i), the onset Transparency (ii) and the slope of the transparency vs displacement (iii) are used to characterize the materials (Figure 3).

**Figure 3**    Force vs displacement and transparency vs displacement plots

## 2. Examples

### 2.1 Synthesis of the inventive and comparative heterophasic propylene-ethylene copolymers (IE1 to IE3 and CE1 to CE5)

The catalyst used to prepare IE1 to IE3 and CE2 to CE5 was a Ziegler-Natta catalyst as used in the inventive examples of WO 2016/066446 A1 and pre-polymerized with vinylcyclohexane to achieve nucleation with poly(vinylcyclohexane). Nucleation by prepolymerization with vinylcyclohexane is described in EP 2 960 256 B1 and EP 2 960 279 B1 in detail. Dicyclopentyl dimethoxy silane (donor D) was used as external donor and triethyl aluminium (TEAL) was used as co-catalyst.

The catalyst used to prepare CE1 was the same as the catalyst described above, except that no vinylcyclohexane prepolymerization was carried out.

The polymerization was carried out in four reactors, one small loop reactor to pre-polymerize the catalyst, one loop reactor in bulk conditions (monomer as the polymerization medium) and two fluidized bed reactors (gas phase conditions). The polymerization conditions for CE1 to CE5 and IE1 to IE3 are presented in Table 1 below. The amount of prepolymer produced (i.e. split of R0) is negligible, and has thus been assigned to the split of the loop reactor.

The resultant polymer powders were compounded with 1500 ppm ADK-STAB A-612 (supplied by Adeka Corporation) and 300 ppm Synthetic hydrotalcite (ADK STAB HT supplied by Adeka Corporation) on a ZSK 58 twin screw extruder, with melt temperature of 205 °C, production rate 200 kg/h.

The properties of CE1 to CE5 and IE1 to IE3 are given in Tables 2 to 4 below.

The 1 mm plaques are $60 \times 60 \times 1$ mm$^3$ injection moulded plaques prepared according to ISO 19069-2. The 400 $\mu$m monolayer films were prepared on Dr. Collin cast film line, with extruder with 30 mm screw and LD of 30, calendaring unit with two cooling rolls (25°C), and melt temperature 220 °C.

**Table 1** Polymerization conditions for CE1 to CE5 and IE1 to IE3.

|  |  | CE1 | CE2 | CE3 | CE4 | CE5 | IE1 | IE2 | IE3 |
|---|---|---|---|---|---|---|---|---|---|
| **Prepolymerization (R0)** | | | | | | | | | |
| TEAL/Ti ratio | mol/mol | 370 | 363 | 253 | 252 | 266 | 283 | 266 | 218 |
| TEAL/donor ratio | mol/mol | 7.8 | 7.8 | 7.8 | 7.8 | 7.8 | 7.8 | 7.8 | 7.8 |
| Temperature | [°C] | 20 | 21 | 20 | 20 | 20 | 21 | 21 | 21 |
| Pressure | [kPa] | 5450 | 5460 | 5430 | 5450 | 5470 | 5440 | 5440 | 5450 |
| H2/C3 | [mol/kmol] | 0.31 | 0.31 | 0.16 | 0.16 | 0.16 | 0.16 | 0.16 | 0.14 |
| **Loop reactor (R1)** | | | | | | | | | |
| Temperature | [°C] | 80 | 80 | 80 | 80 | 80 | 80 | 80 | 80 |

(continued)

| Loop reactor (R1) | | | | | | | | | |
|---|---|---|---|---|---|---|---|---|---|
| Split | [wt.-%] | 44.0 | 46.9 | 37.0 | 36.8 | 37.4 | 37.1 | 36.7 | 41.0 |
| H2/C3 | [mol/kmol] | 0.37 | 0.56 | 0.17 | 0.17 | 0.19 | 0.17 | 0.17 | 0.17 |
| MFR$_2$ (h-PP1) | [g/10 min] | 3.40 | 3.39 | 0.55 | 0.58 | 0.80 | 0.60 | 0.76 | 0.61 |
| 1$^{st}$ Gas phase reactor (R2) | | | | | | | | | |
| Temperature | [°C] | 85 | 85 | 85 | 85 | 85 | 85 | 85 | 85 |
| Split | [wt.-%] | 44.0 | 38.4 | 51.2 | 50.8 | 47.7 | 49.1 | 50.6 | 41.0 |
| Split ratio (R1/R2) | [-] | 50:50 | 55:45 | 42:58 | 42:58 | 44:56 | 43:57 | 42:58 | 50:50 |
| H2/C3 | [mol/kmol] | 7.2 | 11.0 | 27.1 | 31.5 | 33.5 | 23.2 | 27.6 | 37.0 |
| MFR$_2$ (h-PP2) | [g/10 min] | 3.40 | 2.60 | 6.48 | 8.54 | 5.61 | 4.62 | 5.56 | 10.25 |
| MFR$_2$ (M) | [g/10 min] | 3.40 | 3.01 | 2.30 | 2.76 | 2.38 | 1.92 | 2.41 | 2.50 |
| 2$^{nd}$ Gas phase reactor (R3) | | | | | | | | | |
| Temperature | [°C] | 70 | 70 | 70 | 70 | 70 | 70 | 70 | 70 |
| Split | [wt.-%] | 12.0 | 14.7 | 11.8 | 12.4 | 14.9 | 13.8 | 12.7 | 18.0 |
| H2/C2 | [mol/kmol] | 324 | 313 | 48 | 65 | 273 | 320 | 145 | 145 |
| C2/C3 | [mol/kmol] | 437 | 426 | 417 | 734 | 823 | 411 | 426 | 443 |
| MFR$_2$ (total) | [g/10 min] | 3.2 | 2.7 | 1.6 | 1.8 | 1.8 | 2.1 | 1.8 | 1.8 |

Table 2 Properties of the heterophasic propylene-ethylene copolymers

| | | CE1 | CE2 | CE3 | CE4 | CE5 | IE1 | IE2 | IE3 |
|---|---|---|---|---|---|---|---|---|---|
| MFR$_2$ | [g/10 min] | 3.2 | 2.7 | 1.6 | 1.8 | 1.8 | 2.1 | 1.8 | 1.8 |
| C2(total) | [wt.-%] | 5.64 | 6.98 | 6.26 | 8.4 | 9.2 | 5.84 | 6.3 | 8.0 |
| SF | [wt.-%] | 14.9 | 16.7 | 12.8 | 13.6 | 16.5 | 14.3 | 14.4 | 18.7 |
| CF | [wt.-%] | 85.1 | 83.3 | 87.2 | 86.4 | 83.5 | 85.7 | 85.6 | 81.3 |
| C2(SF) | [wt.-%] | 28.8 | 33.3 | 34.2 | 42.7 | 41.7 | 33.4 | 32.1 | 34.6 |
| C2(CF) | [wt.-%] | 2.3 | 2.5 | 3.1 | 3.4 | 4.2 | 2.1 | 2.8 | 1.7 |
| iV | [dL/g] | 2.27 | 2.36 | 2.83 | 2.81 | 2.64 | 2.55 | 2.61 | 2.63 |
| iV(SF) | [dL/g] | 1.89 | 2.30 | 3.80 | 4.38 | 3.00 | 2.17 | 2.90 | 2.94 |
| iV (CF) | [dL/g] | 2.30 | 2.36 | 2.62 | 2.55 | 2.56 | 2.58 | 2.53 | 2.47 |
| Tm | [°C] | 165.9 | 167.5 | 167.7 | 167.5 | 165.1 | 166.5 | 166.6 | 167.1 |
| Tc | [°C] | 114.8 | 128.1 | 128.3 | 129.6 | 129.8 | 129.6 | 129.3 | 128.5 |
| 2,1-regiodefects | [%] | none | none | none | none | none | none | none | none |
| MFR2(h-PP2)/MFR2(h-PP1) | [-] | 1.00 | 0.77 | 11.78 | 14.73 | 7.01 | 7.70 | 7.31 | 16.80 |

Table 3 Mechanical/optical properties of comparative and inventive heterophasic propylene-ethylene copolymers

| | | CE1 | CE2 | CE3 | CE4 | CE5 | IE1 | IE2 | IE3 |
|---|---|---|---|---|---|---|---|---|---|
| Injection moulded specimens | | | | | | | | | |
| Clarity | [%] | 85.6 | 93 | 59.4 | 30.3 | 57.3 | 97.2 | 70.4 | 43.6 |
| Haze | [%] | 65.7 | 85.3 | 100.5 | 101.5 | 98.7 | 68.6 | 98.0 | 99.9 |
| Diffuse luminous transmittance | [%] | 50.5 | 62.6 | 78.9 | 79.2 | 74.9 | 50.5 | 75.9 | 75.8 |

(continued)

| | | CE1 | CE2 | CE3 | CE4 | CE5 | IE1 | IE2 | IE3 |
|---|---|---|---|---|---|---|---|---|---|
| **Injection moulded specimens** | | | | | | | | | |
| Total luminous transmittance | [%] | 76.9 | 73.4 | 78.6 | 78.0 | 75.9 | 73.6 | 77.5 | 75.9 |
| Flexural Modulus | [MPa] | 1050 | 1310 | 1459 | 1490 | 1469 | 1374 | 1447 | 1309 |
| Charpy NIS (23 °C) | [kJ/m$^2$] | 8.6 | 43.8 | 16.7 | 15.6 | 16.3 | 51.2 | 16.6 | 43.6 |
| Charpy NIS (0 °C) | [kJ/m$^2$] | 3.2 | 4.1 | 7.7 | 8.1 | 7.2 | 3.3 | 6.2 | 7.1 |
| Charpy NIS (-20 °C) | [kJ/m$^2$] | 1.9 | 2.0 | 5.6 | 6.2 | 5.3 | 1.9 | 4.1 | 4.8 |
| **400 $\mu$m cast films** | | | | | | | | | |
| Clarity | [%] | 84.7 | 67.0 | 53.5 | 41.1 | 38.5 | 71.7 | 51.5 | 15.1 |
| Haze | [%] | 43.5 | 59.0 | 90.3 | 94.5 | 83.9 | 44.2 | 78.5 | 89.4 |
| Diffuse luminous transmittance | [%] | 38.3 | 50.0 | 79.7 | 83.3 | 72.8 | 37.2 | 68.4 | 77.3 |
| Total luminous transmittance | [%] | 88.2 | 84.4 | 88.1 | 88.1 | 86.7 | 84.1 | 87.3 | 86.5 |
| Tensile Modulus (MD) | [MPa] | 803 | 979 | 1049 | 1090 | 1044 | 1043 | 1050 | 852 |
| Tensile Modulus (TD) | [MPa] | 746 | 914 | 1040 | 1054 | 1007 | 955 | 1021 | 799 |

**Table 4** Stress whitening properties of comparative and inventive heterophasic propylene-ethylene copolymers

| | | CE1 | CE2 | CE3 | CE4 | CE5 | IE1 | IE2 | IE3 |
|---|---|---|---|---|---|---|---|---|---|
| Start brightness (MD) | [mV] | 7013 | 5132 | 3311 | 3050 | 4042 | 5778 | 4248 | 5905 |
| Onset force (MD) | [N] | 50.2 | 75.1 | 72.2 | 70.9 | 74.8 | 72.6 | 74.1 | 76.3 |
| Onset displacement (MD) | [mm] | 12.06 | 3.8 | 1.39 | 1.21 | 1.59 | 3.05 | 1.73 | 2.26 |
| Onset brightness (MD) | [mV] | 7244 | 5118 | 3007 | 2758 | 3762 | 5694 | 3957 | 5695 |
| Maximum force (MD) | [N] | 58.4 | 76.4 | 75.6 | 75.9 | 77.4 | 75.5 | 75.7 | 76.4 |
| Displacement at max force (MD) | [mm] | 2.82 | 3.51 | 1.93 | 1.8 | 2.25 | 2.64 | 2.25 | 2.19 |
| Brightness at max force (MD) | [mV] | 7395 | 5119 | 959 | 576 | 1384 | 5924 | 2051 | 5810.5 |
| Slope (MD) | [mV/mm] | -158 | -674 | -4986 | -5440 | -4393 | -1966 | -4298 | -3833 |
| Intercept (MD) | [mV] | 7987 | 7629 | 10228 | 9572 | 10920 | 10802 | 11654 | 14531 |
| Start brightness (TD) | [mV] | 7049 | 5358 | 3426 | 3035 | 4138 | 5790 | 4372 | 5996 |
| Onset force (TD) | [N] | 52.0 | 61.5 | 66.7 | 65.6 | 61.6 | 65.0 | 66.1 | 68.3 |
| Onset displacement (TD) | [mm] | 2.28 | 1.20 | 1.13 | 1.02 | 1.02 | 1.71 | 1.24 | 1.65 |
| Onset brightness (TD) | [mV] | 6710 | 4675 | 2906 | 2632 | 3577 | 5092 | 3781 | 5280 |
| Maximum force (TD) | [N] | 52.3 | 64.3 | 71.6 | 69.6 | 66.4 | 65.4 | 69.7 | 69.6 |
| Displacement at max force (TD) | [mm] | 2.51 | 1.64 | 1.54 | 1.29 | 1.4 | 1.92 | 1.66 | 2.05 |

(continued)

| | | CE1 | CE2 | CE3 | CE4 | CE5 | IE1 | IE2 | IE3 |
|---|---|---|---|---|---|---|---|---|---|
| Brightness at max force (TD) | [mV] | 6640 | 1116 | 495 | 1278 | 858 | 4066 | 1114 | 2387 |
| Slope (TD) | [mV/mm] | -973 | -11028 | -8329 | -6622 | -10391 | -7410 | -8880 | -9125 |
| Intercept (TD) | [mV] | 9321 | 18627 | 12825 | 9798 | 14681 | 18388 | 15242 | 21047 |

As can be seen from Tables 3 and 4, IE1 to IE3 exhibit an improved balance of mechanical, optical and stress whitening properties, when compared to CE1 and CE2 (i.e. the two examples that do not have the required matrix bimodality). The balance of stiffness (i.e. flexural modulus) and impact strength is improved, in particular for IE1 which achieves a remarkable property balance that is normally only achievable through the use of talc and other fillers. It is known in the art that any increase in the stiffness is typically accompanied by a corresponding decrease in the impact strength, thus improving both properties is particularly notable. Furthermore, the stress whitening properties (in particular the onset force and onset displacement) are worse for CE 1 and CE2, especially in the transverse direction, indicating that stress whitening occurs more readily for CE1 and CE2 than for the inventive examples. IE2 shows improved cold temperature impact performance over IE1, but the stress whitening behavior is slightly reduced. This is compensated in IE3 by increasing the soluble fraction content; however, the optical properties of IE3 suffer as a result. This reduction in optical properties could be corrected by slight reduction of C2(SF) content and/or slight reduction of iV(SF). This allows the skilled person to balance the low temperature mechanical properties and stress whitening properties, depending on the requirements of the end use of the heterophasic propylene-ethylene copolymer.

Furthermore, CE3 demonstrates the effect of increasing the iV(SF) too much, CE5 demonstrates the effect of increasing the C2(SF) too much, whilst CE4 demonstrates the effect of increasing both the iV(SF) and the C2(SF) too much. CE3 to CE5 have worse stress whitening properties, with the onset displacement being lower (indicating that stress whitening occurs earlier) and the slope in the machine direction is much steeper (indicating that stress whitening progresses much faster once onset has occurred).

## Claims

1. A heterophasic propylene-ethylene copolymer (HECO), having a melt flow rate ($MFR_2$), determined according to ISO 1133 at 230 °C and 2.16 kg, in the range from 0.5 to 20.0 g/10 min, comprising:

a) a crystalline matrix (M) being a propylene homopolymer; and
b) an amorphous propylene-ethylene elastomer (E) that is dispersed in said crystalline matrix (M),
wherein the heterophasic propylene-ethylene copolymer (HECO) contains:

i) from 10.0 to 25.0 wt.-%, relative to the total weight of the heterophasic propylene-ethylene copolymer (HECO), of a soluble fraction (SF), determined by CRYSTEX QC analysis, wherein the soluble fraction (SF) has an ethylene content (C2(SF)), determined by CRYSTEX QC analysis, in the range from 20.0 to 40.0 wt.-% and an intrinsic viscosity (iV(SF)), determined by CRYSTEX QC analysis, in the range from 1.50 to 3.50 dL/g; and
ii) from 75.0 to 90.0 wt.-%, relative to the total weight of the heterophasic propylene-ethylene copolymer (HECO), of a crystalline fraction (CF), determined by CRYSTEX QC analysis,

wherein the crystalline matrix (M) comprises:

a) from 35.0 to 65.0 wt.-%, relative to the total weight of the crystalline matrix (M), of a first propylene homopolymer fraction (h-PP1); and
b) from 35.0 to 65.0 wt.-%, relative to the total weight of the crystalline matrix (M), of a second propylene homopolymer fraction (h-PP2),

wherein the melt flow rate ($MFR_2$), determined according to ISO 1133 at 230 °C and 2.16 kg, of the second propylene homopolymer fraction (h-PP2), divided by the melt flow rate ($MFR_2$), determined according to ISO 1133 at 230 °C and 2.16 kg, of the first propylene homopolymer fraction (h-PP1) [$MFR_2$(h-PP2)/$MFR_2$(h-PP1)] is in the range from 2.0 to 20.0.

2. The heterophasic propylene-ethylene copolymer (HECO) according to claim 1, having an intrinsic viscosity of the crystalline fraction (iV(CF)), determined by CRYSTEX QC analysis, in the range from 2.00 to 3.00 dL/g.

3. The heterophasic propylene-ethylene copolymer (HECO) according to claim 1 or claim 2, having an ethylene content of the crystalline fraction (C2(CF)), determined by CRYSTEX QC analysis, in the range from 1.0 to 5.0 wt.-%.

4. The heterophasic propylene-ethylene copolymer (HECO) according to any one of the preceding claims, having an ethylene content (C2(total)) determined by CRYSTEX QC analysis, in the range from 3.0 to 10.0 wt.-%.

5. The heterophasic propylene-ethylene copolymer (HECO) according to any one of the preceding claims, having at least one, preferably all, of the following properties:

    i) the crystalline matrix (M) has a melt flow rate ($MFR_2$), determined according to ISO 1133 at 230 °C and 2.16 kg, in the range from 0.5 to 7.0 g/10 min;
    ii) the first propylene homopolymer fraction (h-PP1) has a melt flow rate ($MFR_2$), determined according to ISO 1133 at 230 °C and 2.16 kg, in the range from 0.1 to 3.0 g/10 min; and/or
    iii) the second propylene homopolymer fraction (h-PP2) has a melt flow rate ($MFR_2$), determined according to ISO 1133 at 230 °C and 2.16 kg, in the range from 3.0 to 15.0 g/10 min.

6. The heterophasic propylene-ethylene copolymer (HECO) according to any one of the preceding claims, wherein the crystalline matrix (M) is free from 2,1-regiodefects, as determined by quantitative $^{13}$C-NMR spectroscopy.

7. The heterophasic propylene-ethylene copolymer (HECO) according to any one of the preceding claims, having a melting temperature ($T_m$), determined according to ISO 11357, in the range from 160 to 172 °C.

8. The heterophasic propylene-ethylene copolymer (HECO) according to any one of the preceding claims, having at least one, preferably all, of the following properties:

    i) a flexural modulus, determined according to ISO 178 on $80\times10\times4$ mm$^3$ injection-moulded specimens prepared according to ISO 19069-2, in the range from 1100 to 2000 MPa;
    ii) a Charpy Notched Impact Strength (NIS) at 23 °C, measured according to ISO 179-1 eA on $80\times10\times4$ mm$^3$ injection-moulded specimens prepared according to ISO 19069-2, in the range from 10.0 to 80 kJ/m$^2$;
    iii) a Charpy Notched Impact Strength (NIS) at 0 °C, measured according to ISO 179-1 eA on $80\times10\times4$ mm$^3$ injection-moulded specimens prepared according to ISO 19069-2, in the range from 2.0 to 9.0 kJ/m$^2$; and/or
    iv) a Charpy Notched Impact Strength (NIS) at -20 °C, measured according to ISO 179-1 eA on $80\times10\times4$ mm$^3$ injection-moulded specimens prepared according to ISO 19069-2, in the range from 1.0 to 7.0 kJ/m$^2$.

9. The heterophasic propylene-ethylene copolymer (HECO) according to any one of the preceding claims, having at least one, preferably both, of the following properties:

    i) a total luminous transmittance, determined according to ASTM D1003 on $60\times60\times1$ mm$^3$ injection-moulded specimens prepared according to ISO 19069-2, in the range from 65.0 to 90.0%; and/or
    ii) a total diffuse luminous transmittance, determined according to ASTM D1003 on $60\times60\times1$ mm$^3$ injection-moulded specimens prepared according to ISO 19069-2, in the range from 35.0 to 90.0%.

10. The heterophasic propylene-ethylene copolymer (HECO) according to any one of the preceding claims, having a total luminous transmittance, determined according to ASTM D1003 on a 400 $\mu$m monolayer cast film specimen, in the range from 75.0 to 94.0%.

11. The heterophasic propylene-ethylene copolymer (HECO) according to any one of the preceding claims, having at least one, preferably both, of the following properties:

    i) a tensile modulus (TM-MD), determined according to ISO 527-3 on a 400 $\mu$m monolayer cast film specimen in the machine direction, in the range from 700 to 1500 MPa; and/or
    ii) a tensile modulus (TM-TD), determined according to ISO 527-3 on a 400 $\mu$m monolayer cast film specimen in the transvers direction, in the range from 600 to 1500 MPa.

12. The heterophasic propylene-ethylene copolymer (HECO) according to any one of the preceding claims, having at least one, preferably all, of the following properties:

    i) a stress whitening onset force in the machine direction, determined according to the method described in the determination methods on a 400 $\mu$m monolayer cast film specimen, in the range from 55 to 100 N;
    ii) a stress whitening onset displacement in the machine direction, determined according to the method described in the determination methods on a 400 $\mu$m monolayer cast film specimen, in the range from 1.50 to 4.00 mm; and/or
    iii) a slope of the stress whitening light curve in the machine direction, determined according to the method described in the determination methods on a 400 $\mu$m monolayer cast film specimen, in the range from -6000 to 0 mV/mm.

13. The heterophasic propylene-ethylene copolymer (HECO) according to any one of the preceding claims, having at least one, preferably all, of the following properties:

    i) a stress whitening onset force in the transverse direction, determined according to the method described in the determination methods on a 400 $\mu$m monolayer cast film specimen, in the range from 55 to 100 N;
    ii) a stress whitening onset displacement in the transverse direction, determined according to the method described in the determination methods on a 400 $\mu$m monolayer cast film specimen, in the range from 1.10 to 4.00 mm; and/or
    iii) a slope of the stress whitening light curve in the transverse direction, determined according to the method described in the determination methods on a 400 $\mu$m monolayer cast film specimen, in the range from -10,000 to 0 mV/mm.

14. An article, more preferably an injection moulded article, a cast film, or a blown film, wherein the article comprises at least 75 wt.-% of the heterophasic propylene-ethylene copolymer (HECO) according to any one of the preceding claims.

Europäisches
Patentamt

European
Patent Office

Office européen
des brevets

# EUROPEAN SEARCH REPORT

**Application Number**

EP 24 17 4181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/207825 A1 (BOREALIS AG [AT]) 15 October 2020 (2020-10-15) * page 3, paragraph second last * * page 8, lines 2-3 * * claim 1; example all; table 1 * | 1-14 | INV. C08F110/06 C08F210/06 C08F4/651 C08J5/18 B32B27/32 |
| A | WO 2021/078857 A1 (BOREALIS AG [AT]) 29 April 2021 (2021-04-29) * claim 1; examples PP5-6; tables 1-4 * | 1-14 | |
| A | EP 4 101 890 A1 (BOREALIS AG [AT]) 14 December 2022 (2022-12-14) * paragraphs [0132] - [0133]; claim 1; example all; tables 1-2 * | 1-14 | |
| X | EP 3 940 003 A1 (BOREALIS AG [AT]) 19 January 2022 (2022-01-19) * paragraph [0004]; claim 1; examples PP2-3; tables 1-2 * | 1-14 | |

| | |
|---|---|
| | TECHNICAL FIELDS SEARCHED (IPC) |
| | C08J B32B C08F C08L |

The present search report has been drawn up for all claims

| Place of search | Date of completion of the search | Examiner |
|---|---|---|
| Munich | 9 October 2024 | Bernhardt, Max |

EPO FORM 1503 03.82 (P04C01)

## ANNEX TO THE EUROPEAN SEARCH REPORT
## ON EUROPEAN PATENT APPLICATION NO.

EP 24 17 4181

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | | Publication date | Patent family member(s) | | Publication date |
|---|---|---|---|---|---|
| WO 2020207825 | A1 | 15-10-2020 | EP | 3953401 A1 | 16-02-2022 |
| | | | US | 2022195166 A1 | 23-06-2022 |
| | | | WO | 2020207825 A1 | 15-10-2020 |
| WO 2021078857 | A1 | 29-04-2021 | NONE | | |
| EP 4101890 | A1 | 14-12-2022 | BR | 112023025572 A2 | 20-02-2024 |
| | | | CN | 117460775 A | 26-01-2024 |
| | | | EP | 4101890 A1 | 14-12-2022 |
| | | | JP | 2024520765 A | 24-05-2024 |
| | | | KR | 20240010083 A | 23-01-2024 |
| | | | US | 2024262997 A1 | 08-08-2024 |
| | | | WO | 2022258578 A1 | 15-12-2022 |
| EP 3940003 | A1 | 19-01-2022 | BR | 112023000550 A2 | 31-01-2023 |
| | | | CN | 116194529 A | 30-05-2023 |
| | | | EP | 3940003 A1 | 19-01-2022 |
| | | | US | 2023257570 A1 | 17-08-2023 |
| | | | WO | 2022013051 A1 | 20-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018141672 A
- EP 0887379 A
- WO 9212182 A
- WO 2004000899 A
- WO 2004111095 A
- WO 9924478 A
- WO 9924479 A
- WO 0068315 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- WO 2016066446 A1
- EP 2960256 B1
- EP 2960279 B1

**Non-patent literature cited in the description**

- **BUSICO, V** ; **CIPULLO, R.** *Prog. Polym. Sci.*, 2001, vol. 26, 443
- **BUSICO, V** ; **CIPULLO, R.** ; **MONACO, G.** ; **VACATELLO, M** ; **SEGRE, A.L.** *Macromoleucles*, 1997, vol. 30, 6251
- **ZHOU** ; **KUEMMERLE, R.** ; **QIU, X.** ; **REDWINE, D.** ; **CONG, R.** ; **TAHA, A** ; **BAUGH, D.** ; **WINNIFORD, B.** *J. Mag. Reson.*, 2007, vol. 187, 225
- **BUSICO, V.** ; **CARBONNIERE, P** ; **CIPULLO, R** ; **PELLECCHIA, R** ; **SEVERN, J.** ; **TALARICO, G.** *Macromol. Rapid Commun.*, 2007, vol. 28, 1128
- **RESCONI, L.** ; **CAVALLO, L** ; **FAIT, A.** ; **PIEMONTESI, F.** *Chem. Rev.*, 2000, vol. 100, 1253
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson.*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N**. *Macromolecules*, 1984, vol. 17, 1950